# EUROPÄISCHE PATENTSCHRIFT

(11) **EP 3 995 724 B1**
(45) Veröffentlichungstag und Bekanntmachung des Hinweises auf die Patenterteilung: **07.08.2024**
(21) Anmeldenummer: 21200423.8
(22) Anmeldetag: 01.10.2021
(51) Int. Cl.: F16L 3/10, F16B 37/12, F16L 3/11, F16L 55/035

(54) **ROHRSCHELLE**
PIPE CLIP
COLLIER DE SERRAGE

(30) Priorität: 06.11.2020 DE 102020129262
(43) Veröffentlichungstag der Anmeldung: 11.05.2022
(73) Patentinhaber: Sikla Holding GmbH, 4614 Marchtrenk (AT)
(72) Erfinder: Brugger, Günter, 78589 Dürbheim (DE); Feichtinger, Alois, 4840 Vöcklabruck (AT)
(74) Vertreter: Mertzlufft-Paufler, Cornelius

(56) Entgegenhaltungen:
- EP-A1- 3 560 839
- DE-U1- 8 337 630
- DE-U1- 8 423 146
- DE-U1- 9 315 194
- FR-A- 593 721

## Beschreibung

Die Erfindung betrifft eine Rohrschelle mit zumindest einem Schellenbügel, an dem außenumfangsseitig mindestens ein Gewindeanschlussteil vorgesehen ist, das zum Verbinden mit einem Gewindeanschlussteil-Gegenstück mindestens ein Außengewinde und wenigstens ein Innengewinde aufweist.

Aus dem deutschen Gebrauchsmuster DE 83 37 630 ist bereits eine Rohrschelle der eingangs erwähnten Art mit zwei halbkreisförmigen Schellenbügeln vorbekannt. Die Schellenbügel sind an ihren benachbarten Schellenenden derart verbindbar, dass ein von diesen Schellenbügeln umgriffenes Rohr in der vorbekannten Rohrschelle fest eingespannt werden kann. Um die das Rohr umgreifende Rohrschelle beispielsweise an einer Wand oder einer Decke befestigen zu können, ist an einem der Schellenbügel außenumfangsseitig ein Gewindeanschlussteil vorgesehen, das zum Verbinden mit einem Gewindestab, einer Anschlusshülse oder dergleichen Gewindeanschlussteil-Gegenstück mindestens ein Außengewinde und wenigstens ein Innengewinde, vorzugsweise ein Außengewinde und zwei sich koaxial aneinander anschließende Innengewinde unterschiedlicher Größe, aufweist. Da das Gewindeanschlussteil der vorbekannten Rohrschelle unterschiedliche Gewinde und Gewindegrößen aufweist, lassen sich je nach Bedarf verschiedene Gewindestäbe, Anschlusshülsen oder dergleichen Gewindeanschlussteil-Gegenstücke an ein und demselben Rohrschellen-Typ verbinden.

Um an dem Gewindeanschlussteil der eingangs erwähnten Rohrschelle nun eine Gewindehülse mit Innengewinde oder entsprechende Gewindestäbe anbringen zu können, kann es notwendig sein, dass auch das Gewindeanschlussteil der Rohrschelle drehfest gehalten werden muss. Man ist daher dazu übergegangen, am Außenumfang des Gewindeanschlussteiles parallele Abflachungen als Werkzeugangriffsfläche für einen Maulschlüssel vorzusehen ('Sikla Gleitrohrschelle ratio S-K` in: www.ausschreiben.de/Katalog/Sikla/Position/56). Eine derartige Rohrschelle ist auch aus der Druckschrift DE 93 15 194 U1 vorbekannt. Das Einarbeiten dieser parallelen Abflachungen ist jedoch mit einem zusätzlichen erheblichen Aufwand verbunden.

Aus der Druckschrift EP 3 560 839 A1 ist ferner eine Verankerungsmutter für ein EME-Schutzkappensystem vorbekannt. Die Verankerungsmutter weist eine Vielzahl von Rippenelementen auf, die mit Gewindegängen versehen sind. Die Rippenelemente ermöglichen die Verwendung eines Steckschlüsselwerkzeugs, um die Verankerungsmutter auf dem Gewindebolzen anzuziehen.

Es besteht daher die Aufgabe, eine Rohrschelle der eingangs erwähnten Art zu schaffen, die sich durch einen demgegenüber reduzierten Herstellungsaufwand auszeichnet.

Die erfindungsgemäße Lösung dieser Aufgabe besteht bei der Rohrschelle der eingangs erwähnten Art darin, dass das Gewindeanschlussteil aus einem Stababschnitt hergestellt ist oder einen Stababschnitt aufweist, dessen Stabquerschnitt ein regelmäßiges Vieleck bildet, dass die Kanten am Außenumfang des Stababschnittes das mindestens eine Außengewinde tragen, und dass die zwischen den gewindetragenden Kanten angeordneten parallelen Teilbereiche gegenüberliegender Stab-Längsseiten des Stababschnittes als Werkzeugangriffsflächen vorgesehen sind.

Die erfindungsgemäße Rohrschelle weist zumindest einen Schellenbügel auf, an dem außenumfangseitig mindestens ein Gewindeanschlussteil vorgesehen ist. Damit am Gewindeanschlussteil der erfindungsgemäßen Rohrschelle wahl- oder wechselweise ein Gewindestab, eine Anschlussmutter, eine Anschlusshülse oder dergleichen Gewindeanschlussteil-Gegenstück befestigt werden kann, weist das

Gewindeanschlussteil-Gegenstück mindestens ein Außengewinde und wenigstens ein Innengewinde auf. Um die erfindungsgemäße Rohrschelle und dessen Gewindeanschlussteil-Gegenstück mit reduziertem Aufwand herstellen zu können, ist das Gewindeanschlussteil aus einem Stababschnitt hergestellt oder weist einen solchen Stababschnitt auf, dessen Stabquerschnitt ein regelmäßiges Vieleck bildet. Dabei ist das mindestens eine Außengewinde in die Kanten am Außenumfang des Stababschnittes eingearbeitet, während die zwischen diesen gewindetragenden Kanten angeordneten parallelen Teilbereiche gegenüberliegender Stab-Längsseiten des Stababschnittes als Werkzeugangriffsfläche für einen Maulschlüssel oder dergleichen Drehwerkzeug vorgesehen sind. Da das Gewindeanschlussteil-Gegenstück wegen des mindestens einen, darin eingearbeiteten koaxialen Innengewindes bereits einen vergleichsweise großen Außendurchmesser hat, ist auch das an den Kanten des als regelmäßiges Vieleck ausgebildeten Stabquerschnittes des Stababschnittes eingearbeitete und entsprechend große Außengewinde völlig ausreichend, um eine feste und belastbare Verbindung zwischen dem Gewindeanschlussteil und einem auf das Gewindeanschlussteil aufgeschraubten Gewindeanschlussteil-Gegenstück herzustellen. Da die zwischen den gewindetragenden Kanten angeordneten parallelen Teilbereiche gegenüberliegender Stab-Längsseiten des Stababschnittes gleichzeitig als Werkzeugangriffsflächen für einen Maulschlüssel oder dergleichen Drehwerkzeug vorgesehen sind, lässt sich das Gewindeanschlussteil an diesen Werkzeugangriffsflächen bequem und drehfest halten, wenn an das Gewindeanschlussteil entsprechende Gegenstücke aufgeschraubt werden sollen, auch ohne dass die Verbindung zwischen dem Schellenbügel und dem daran befestigten Gewindeanschlussteil zu sehr belastet wird.

Dabei sehen bevorzugte Ausführungsbeispiele gemäß der Erfindung vor, dass der Stabquerschnitt des Stababschnittes als Viereck- oder als Sechseck ausgebildet ist. Ein solcher Stababschnitt, dessen Stabquerschnitt als Viereck oder als Sechseck ausgebildet ist, weist an den parallelen Teilbereichen gegenüberliegender Stab-Längsseiten die zwischen den gewindetragenden Kanten angeordnet sind, ausreichend breite Werkzeugangriffsflächen auf, um auch ein hohes Drehmoment auf den Stababschnitt aufzubringen oder daran abzufangen.

Die Handhabung der erfindungsgemäßen Rohrschelle wird erleichtert und/oder die Belastbarkeit der erfindungsgemäßen Rohrschelle im Bereich ihres Gewindeanschlussteiles wird erhöht, wenn das Gewindeanschlussteil an seinem dem Schellenbügel abgewandten Endbereich einen Abschnitt mit zylindrischem Außenumfang aufweist.

Um die erfindungsgemäße Rohrschelle mit Abstand von der als Befestigungsunterlage dienenden Decke oder Wand anordnen zu können, ist es vorteilhaft, wenn das Gewindeanschlussteil-Gegenstück als ein in das wenigstens eine Innengewinde des Gewindeanschlussteiles einschraubbarer Gewindestab ausgebildet ist.

Die vielseitige Anwendbarkeit der erfindungsgemäßen Rohrschelle wird noch erhöht, wenn das Gewindeanschlussteil-Gegenstück als eine auf das mindestens eine Außengewinde des Gewindeanschlussteiles aufschraubbare Anschlussmutter oder Anschlusshülse ausgebildet ist.

Dabei sieht eine bevorzugte Weiterbildung gemäß der Erfindung vor, dass die Anschlussmutter oder Anschlusshülse wenigstens zwei unterschiedlich große Innengewinde-Abschnitte trägt, von denen ein erster Innengewinde-Abschnitt komplementär zu dem zumindest einen Außengewinde des Gewindeanschlussteiles ausgebildet ist und von denen mindestens ein weiterer Innengewinde-Abschnitt ein demgegenüber größeres oder kleineres Innengewinde aufweist. Ein solches als Anschlussmutter oder Anschlusshülse ausgebildetes Gewindeanschlussteil-Gegenstück kann somit praktisch als Adapter dienen, um über die am Gewindeanschlussteil vorgesehenen Gewinde hinaus noch weitere größere oder kleinere Gewinde zum Verbinden mit weiteren Bestandteilen eines umfassenderen Montage-Systems bereitzustellen.

Vorteilhaft ist es, wenn der Schellenbügel im Ansatzbereich des Gewindeanschlussteiles eine kugelabschnittartige konvexe, in Richtung des Gewindeanschlussteiles gerichtete Ausbuchtung aufweist. Eine solche Ausbuchtung begünstigt den belastbaren und gegebenenfalls auch drehfesten Halt des Gewindeanschlussteiles an dem zugeordneten Schellenbügel der erfindungsgemäßen Rohrschelle.

Um zwischen dem Schellenbügel der erfindungsgemäßen Rohrschelle und dem daran befestigten Gewindeanschlussteil eine stabile Verbindung zu gewährleisten, ist es vorteilhaft, wenn das Gewindeanschlussteil mit dem Schellenbügel verschweißt ist. Dabei kann das Gewindeanschlussteil bei Bedarf auch ein Loch im Schellenbügel durchsetzen und dieses Loch mit einem verbreiterten Fuß des Gewindeanschlussteiles innenseitig hintergreifen.

Dabei wird die einfache Herstellung der erfindungsgemäßen Rohrschelle und der feste Halt des Gewindeanschlussteiles an ihrem Schellenbügel begünstigt, wenn das Gewindeanschlussteil und der Schellenbügel mittels Widerstandsschweißung verbunden sind.

Weiterbildungen gemäß der Erfindung ergeben sich aus der nachfolgenden Beschreibung erfindungsgemäßer Ausführungsbeispiele in Verbindung mit den Ansprüchen sowie der Zeichnung. Nachstehend werden bevorzugte Ausführungsbeispiele gemäß der Erfindung noch näher beschrieben.

Es zeigt:

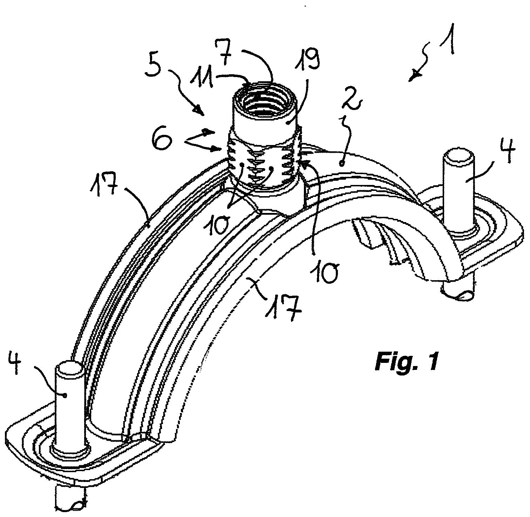

- Figur 1:: einen in perspektivischer Darstellung gezeigten halbkreisförmigen Schellenbügel einer Rohrschelle, an welchem Schellenbügel außenumfangseitig ein Gewindeanschlussteil vorgesehen ist, das zum Verbinden mit einem Gewindeanschlussteil-Gegenstück ein Außengewinde sowie wenigstens ein Innengewinde aufweist, wobei das Gewindeanschlussteil aus einem Stababschnitt hergestellt ist und/oder einen solchen Stababschnitt aufweist, dessen Stabquerschnitt ein regelmäßiges Vieleck und hier ein Sechseck bildet, und wobei die Kanten am Außenumfang des Stababschnittes das Außengewinde tragen, während demgegenüber die zwischen diesen gewindetragenden Kanten angeordneten parallelen Teilbereiche gegenüberliegender Stab-Längsseiten des Stababschnittes als Werkzeugangriffsflächen für einen Maulschlüssel oder dergleichen vorgesehen sind,

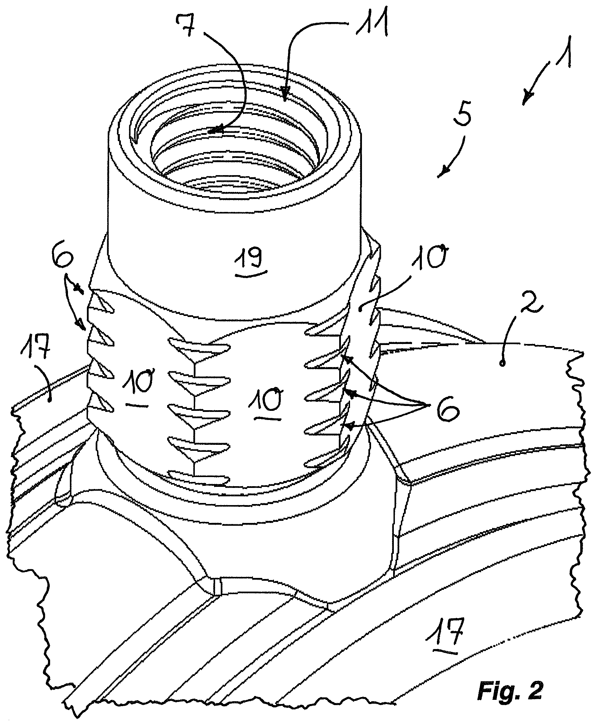

- Figur 2:: den Schellenbügel aus Figur 1 in einer perspektivischen Detaildarstellung im Bereich seines Gewindeanschlussteiles,

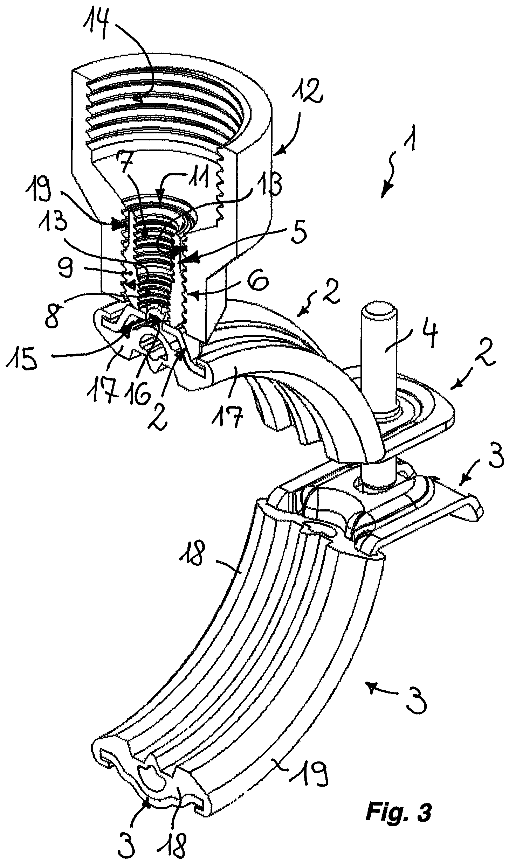

- Figur 3:: die aus zwei halbkreisförmigen Schellenbügeln gebildete Rohrschelle aus Figur 1 und 2 in einem Längsschnitt durch das an einem der Schellenbügel gehaltene Gewindeanschlussteil, wobei auf das hier ebenfalls längsgeschnittene Gewindeanschlussteil eine Anschlusshülse mit zwei Innengewinde-Abschnitten unterschiedlicher Größe aufgeschraubt ist, welche Anschlusshülse einen ersten Innengewindeabschnitt mit einer zum Außengewinde des Gewindeanschlussteiles der Rohrschelle komplementären Innengewinde aufweist, während demgegenüber der zum gegenüberliegenden Stirnende der Anschlusshülse hin offene weitere zweite Innengewinde-Abschnitt ein demgegenüber wesentlich größeres Innengewinde trägt,

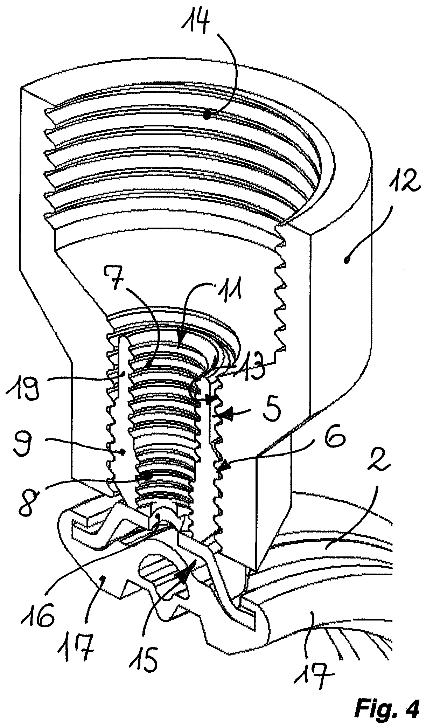

- Figur 4:: die bereits in Figur 3 gezeigte Rohrschelle in einem perspektivischen Detail-Längsschnitt im Bereich des Gewindeanschlussteiles, und

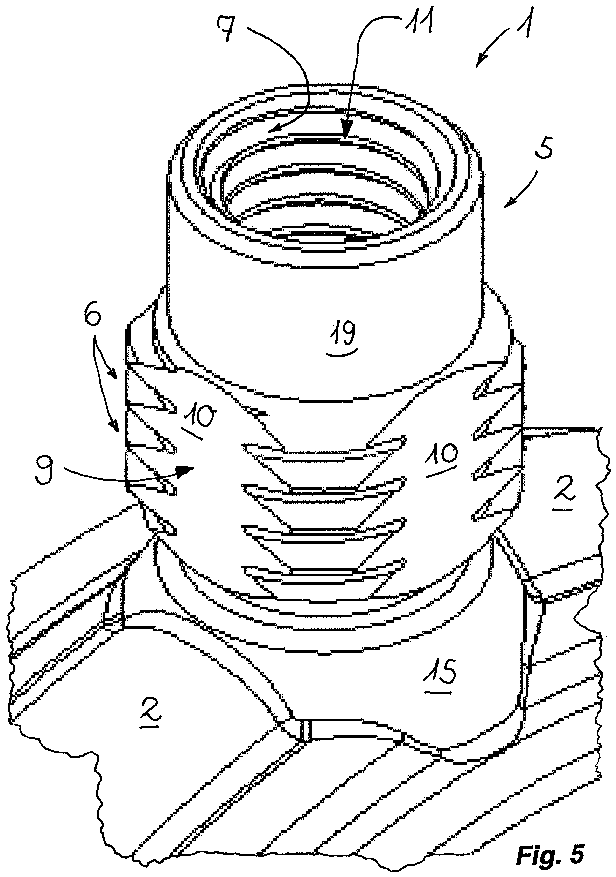

- Figur 5:: einen mit Figur 1 und 2 vergleichbar ausgestalteten Schellenbügel in einer perspektivischen Detailansicht im Bereich seines Gewindeanschlussteiles, das hier aus einem Vierkant-Stababschnitt hergestellt ist und/oder einen solchen Vierkant-Stababschnitt aufweist, wobei die Kanten am Außenumfang des Vierkant-Stababschnittes das Außengewinde tragen, während demgegenüber die zwischen diesen gewindetragenden Kanten angeordneten parallelen Teilbereiche gegenüberliegender Stab-Längsseiten des Vierkant-Stababschnittes als Werkzeugangriffsflächen für einen Maulschlüssel oder dergleichen vorgesehen sind.

In den Figuren 1 bis 5 sind zwei Ausführungen einer Rohrschelle 1 gezeigt, die zwei etwa halbkreisförmige Schellenbügel 2, 3 hat. Die Schellenbügel 2, 3 der Rohrschelle 1 können an ihren Schellenenden mithilfe von Spannschrauben 4 derart miteinander verbunden werden, dass ein zwischen den Schellenbügeln 2, 3 gehaltenes Rohr zwischen den Schellenbügeln 2, 3 fest eingespannt werden kann. Um das in der Rohrschelle 1 gehaltene Rohr an einer Montageschiene und/oder mit Abstand von der Decke, dem Boden oder dergleichen Befestigungsuntergrund montieren zu können, ist an zumindest einem der Schellenbügel 2,3 außenumfangseitig ein Gewindeanschlussteil 5 vorgesehen, das zum Verbinden mit einem Gewindeanschlussteil-Gegenstück mindestens ein Außengewinde 6 und wenigstens ein Innengewinde 7, 8 aufweist.

Wie aus einem Vergleich der in den Figuren 1 bis 5 gezeigten Ausführungen deutlich wird, ist das Gewindeanschlussteil 5 der Rohrschelle 1 aus einem Stababschnitt 9 hergestellt oder weist einen solchen Stababschnitt 9 auf, dessen Stabquerschnitt ein regelmäßiges Vieleck bildet. Aus den perspektivischen Detailansichten des Gewindeanschlussteiles 5 gemäß den Figuren 2 und 5 ist erkennbar, dass die Kanten am Außenumfang des Stababschnittes 9 mindestens eine Außengewinde 6 tragen, während demgegenüber die zwischen den gewindetragenden Kanten angeordneten parallelen Teilbereiche 10 gegenüberliegender Stab-Längsseiten des Stababschnittes 9 als Werkzeugangriffsflächen für einen Maulschlüssel oder dergleichen Drehwerkzeug vorgesehen sind. Während die in den Figuren 1 bis 4 gezeigte Rohrschelle 1 ein Gewindeanschlussteil 5 hat, das am Sechskant-Stababschnitt hergestellt ist, ist das Gewindeanschlussteil 5 der in Figur 5 gezeigten Rohrschellenausführung demgegenüber als Vierkant-Stababschnitt ausgestaltet.

Da das Gewindeanschlussteil 5 wegen der darin eingearbeiteten koaxialen Innengewinde 7, 8 bereits einen vergleichsweise großen Außendurchmesser hat, ist auch das an den entsprechend eingeschnitten Kanten der Viereck- oder der Sechseck-Form des Stababschnittes 9 vorgesehene Außengewinde 6 ausreichend groß, um eine feste und belastbare Verbindung zwischen dem Gewindeanschlussteil 5 und einem Gewindeanschlussteil-Gegenstück herzustellen. Wird in eines der Innengewinde 7, 8 im Gewindeanschlussteil 5 ein Gewindestab eingeschraubt, kann das Gewindeanschlussteil 5 an den parallelen Teilbereichen 10 gegenüberliegender Stab-Längsseiten mithilfe eines Maulschlüssels derart ergriffen und gesichert werden, dass auf einfache Weise eine feste und belastbare Verbindung zwischen dem Gewindeanschlussteil 5 und dem darauf aufgeschraubten, als Gewindeanschlussteil-Gegenstück dienenden Gewindestab hergestellt ist.

In den Figuren 1 und 2 ist besonders gut erkennbar, dass das Gewindeanschlussteil 5 an seinem dem Schellenbügel 2 abgewandten Endbereich einen Abschnitt mit zylindrischem Außenumfang aufweist. Da das Gewindeanschlussteil 5 an seinem, dem Schellenbügel 2 abgewandten Endbereich einen zylindrischen Außenumfang hat, und da dieser zylindrische Außenumfang in radialer Richtung nicht über die einander zugeordneten parallelen Teilbereiche 10 gegenüberliegender Stab-Längsseiten des mit einem als regelmäßiges Vieleck ausgebildeten Stabquerschnitt ausgestatteten Stababschnittes 9 vorsteht, lässt sich das Innengewinde eines Gewindeanschlussteil-Gegenstückes leicht über das Gewindeanschlussteil 5 stülpen, wenn dieses Innengewinde auf das Außengewinde 6 des Gewindeanschlussteiles 5 aufgeschraubt werden soll.

Aus einer zusammenschauenden Betrachtung der Figuren 1 bis 5 wird deutlich, dass das Gewindeanschlussteil 5 und dessen Stababschnitt 9 hülsenförmig ausgebildet sind und an dem dem Schellenbügel 2 abgewandten Stirnende eine, in einem Hülseninnenraum mündende Einschrauböffnung 11 aufweist, wobei am Innenumfang des Hülseninnenraums das wenigstens eine Innengewinde 7, 8 vorgesehen ist. Die hier dargestellten Ausführungen der Rohrschelle 1 weisen im Hülseninnenraum des Stababschnittes 9 zumindest zwei unterschiedlich große Innengewinde 7, 8 auf, von denen sich ein mittelgroßes Innengewinde 7 unmittelbar an die Einschrauböffnung 11 anschließt, während zumindest ein demgegenüber kleineres Innengewinde 8 sich daran in Richtung zum Schellenbügel 2 anschließt.

In den Figuren 3 und 4 ist angedeutet, dass ein mit der Rohrschelle 1 kombinierbares Gewindeanschlussteil-Gegenstück als eine auf das mindestens eine Außengewinde 6 des Gewindeanschlussteiles 5 aufschraubbare Anschlusshülse 12 ausgebildet sein kann. Die hier dargestellte Anschlusshülse 12 weist wenigstens zwei unterschiedlich große Innengewinde-Abschnitte 13, 14 auf, wobei die Anschlusshülse 12 an ihren beiden Stirnseiten jeweils offen ausgebildet ist und jeweils eine Einschrauböffnung hat. Während ein erster Innengewinde-Abschnitt 13 der Anschlusshülse 12 komplementär zu dem zumindest einen Außengewinde 6 des Gewindeanschlussteiles 5 ausgebildet ist, weist ein dem Schellenbügel 2 abgewandter Innengewinde-Abschnitt 14 ein demgegenüber größeres Innengewinde auf. Dabei dient die Anschlusshülse 12 als Adapter, der über die am Gewindeanschlussteil 5 der Rohrschelle 1 vorgesehenen Innen- und Außengewinde hinaus noch weitere Gewinde und Gewindegrößen zur Verfügung stellt.

Aus einem Vergleich der Figuren 1 bis 5 wird deutlich, dass der Schellenbügel 2 im Ansatzbereich des Gewindeanschlussteiles 5 eine kugelabschnittartige, konvexe, in Richtung des Gewindeanschlussteiles 5 gerichtete Ausbuchtung 15 aufweist. Dabei ist das Gewindeanschlussteil 5 mit dem Schellenbügel 2 verschweißt.

An den Schellenbügeln 2, 3 der in den Figuren 1 bis 4 dargestellten Rohrschelle 1 sind Einlagen 17, 18 aus Gummi oder elastischem Kunststoffmaterial gehalten, welche mit ihren außenliegenden Längsrändern die Schellenbügel 2, 3 randseitig umgreifen. Diese Einlagen 17, 18 bilden eine Isolierung und/oder eine Gleitfläche zwischen den vorzugsweise aus Metallblech hergestellten Schellenbügeln 2, 3 der Rohrschelle 1 einerseits und dem darin gehaltenen, hier nicht weiter dargestellten Rohr andererseits.

### / Bezugszeichenliste

### Bezugszeichenliste

- 1: Rohrschelle
- 2: Schellenbügel (mit Gewindeanschlussteil)
- 3: Schellenbügel
- 4: Spannschraube
- 5: Gewindeanschlussteil
- 6: Außengewinde
- 7: (größeres) Innengewinde
- 8: (kleineres) Innengewinde
- 9: Vierkant-Stababschnitt (Fig. 5) oder Sechskant-Stababschnitt (Fig. 1 bis 4)
- 10: (als Werkzeugangriffsflächen vorgesehene) Teilbereiche
- 11: Einschrauböffnung
- 12: Anschlusshülse
- 13: (kleineres) Innengewinde (der Anschlusshülse 12)
- 14: (größeres) Innengewinde (der Anschlusshülse 12)
- 15: Ausbuchtung (am Schellenbügel 2)
- 16: Lochung
- 17: Einlage (am Schellenbügel 2)
- 18: Einlage (am Schellenbügel 3)
- 19: zylindrischer Endbereich des Gewindeanschlussteiles 5

## Patentansprüche

1. Rohrschelle (1) mit zumindest einem Schellenbügel (2), an dem außenumfangsseitig mindestens ein Gewindeanschlussteil (5) vorgesehen ist, das (5) zum Verbinden mit einem Gewindeanschlussteil-Gegenstück mindestens ein Außengewinde (6) und wenigstens ein Innengewinde (7, 8) aufweist,
wobei das Gewindeanschlussteil (5) aus einem Stababschnitt (9) hergestellt ist oder einen Stababschnitt (9) aufweist, dessen Stabquerschnitt ein regelmäßiges Vieleck bildet, wobei
die Kanten am Außenumfang des Stababschnittes (9) das mindestens eine Außengewinde (6) tragen, und wobei
die zwischen den gewindetragenden Kanten angeordneten parallelen Teilbereiche (10) gegenüberliegender Stab-Längsseiten des Stababschnittes (9) als Werkzeugangriffsflächen vorgesehen sind.

2. Rohrschelle nach Anspruch 1, **dadurch gekennzeichnet, dass** der Stabquerschnitt des Stababschnittes (9) als Viereck oder als Sechseck ausgebildet ist.

3. Rohrschelle nach Anspruch 1 oder 2, **dadurch gekennzeichnet, dass** das Gewindeanschlussteil (5) an seinem dem Schellenbügel (2) abgewandten Endbereich einen Abschnitt (19) mit zylindrischem Außenumfang aufweist.

4. Rohrschelle nach einem der Ansprüche 1 bis 3, **dadurch gekennzeichnet, dass** der Stababschnitt (9) hülsenförmig ausgebildet ist und an seinem dem Schellenbügel (2) abgewandten Stirnende eine, in einem Hülseninnenraum mündende Einschrauböffnung (11) aufweist, und dass am Innenumfang des Hülseninnenraums das wenigstens eine Innengewinde (7, 8) vorgesehen ist.

5. Rohrschelle nach einem der Ansprüche 1 bis 4, **dadurch gekennzeichnet, dass** der Stababschnitt (9) in seinem Hülseninnenraum zumindest zwei unterschiedlich große Innengewinde (7, 8) aufweist, von denen sich ein mittelgroßes Innengewinde (7) unmittelbar an die Einschrauböffnung (11) anschließt und von denen zumindest ein demgegenüber kleineres Innengewinde (8) sich daran in Richtung zum Schellenbügel (2) anschließt.

6. Rohrschelle nach einem der Ansprüche 1 bis 5, **dadurch gekennzeichnet, dass** das Gewindeanschlussteil-Gegenstück als ein in das wenigstens eine Innengewinde (7, 8) des Gewindeanschlussteiles (5) einschraubbarer Gewindestab ausgebildet ist.

7. Rohrschelle nach einem der Ansprüche 1 bis 5, **dadurch gekennzeichnet, dass** das Gewindeanschlussteil-Gegenstück als eine auf das mindestens eine Außengewinde (6) des Gewindeanschlussteiles (5) aufschraubbare Anschlussmutter oder Anschlusshülse (12) ausgebildet ist.

8. Rohrschelle nach Anspruch 7, **dadurch gekennzeichnet, dass** die Anschlussmutter oder Anschlusshülse (12) wenigstens zwei unterschiedlich große Innengewinde-Abschnitte (13, 14) trägt, von denen ein erster Innengewinde-Abschnitt (13) komplementär zu dem zumindest einen Außengewinde (6) des Gewindeanschlussteiles (5) ausgebildet ist und von denen mindestens ein weiterer Innengewinde-Abschnitt (14) ein demgegenüber größeres oder kleineres Innengewinde aufweist.

9. Rohrschelle nach einem der Ansprüche 1 bis 8, **dadurch gekennzeichnet, dass** der Schellenbügel (2) im Ansatzbereich des Gewindeanschlussteiles (5) eine kugelabschnittförmige, konvexe, in Richtung des Gewindeanschlussteiles (5) gerichtete Ausbuchtung (15) aufweist.

10. Rohrschelle nach einem der Ansprüche 1 bis 9, **dadurch gekennzeichnet, dass** das Gewindeanschlussteil (5) mit dem Schellenbügel (2) verschweißt ist.

11. Rohrschelle nach einem der Ansprüche 1 bis 10, **dadurch gekennzeichnet, dass** das Gewindeanschlussteil (5) vorzugsweise ein Loch (16) des Schellenbügels (2) durchsetzt und das Loch (16) mit einem verbreiterten Fuß innen hintergreift.

12. Rohrschelle nach einem der Ansprüche 1 bis 11, **dadurch gekennzeichnet, dass** das Gewindeanschlussteil (5) und der Schellenbügel (2) mittels Widerstandsschweißung verbunden sind.

## Claims

1. Pipe clip (1) having at least one clip bracket (2), on the outer circumferential side of which at least one threaded connection part (5) is provided, which part (5) has at least one external thread (6) and at least one internal thread (7, 8) for connection to a threaded connection part counterpart, wherein the threaded connection part (5) is made from a rod section (9) or has a rod section (9), the rod cross-section of which forms a regular polygon, wherein the edges on the outer circumference of the rod section (9) bear the at least one external thread (6), and wherein the edges arranged between the thread-bearing edges of the rod section (9) bear the at least one external thread (6), and wherein the parallel partial regions (10) of opposite longitudinal sides of the rod section (9) arranged between the thread-bearing edges are provided as tool-engaging surfaces.

2. Pipe clip according to claim 1, **characterized in that** the rod cross-section of the rod section (9) is designed as a quadrilateral or as a hexagon.

3. Pipe clip according to claim 1 or 2, **characterized in that** the threaded connection part (5) has a section (19) with a cylindrical outer circumference at its end region facing away from the clip bracket (2).

4. Pipe clip according to one of claims 1 to 3, **characterized in that** the rod section (9) is sleeve-shaped and has a screw-in opening (11) opening into a sleeve interior at its end facing away from the clip bracket (2), and **in that** the at least one internal thread (7, 8) is provided on the inner circumference of the sleeve interior.

5. Pipe clip according to one of claims 1 to 4, **characterized in that** the rod section (9) has at least two differently sized internal threads (7, 8) in its sleeve interior, of which one medium-sized internal thread (7) adjoins the screw-in opening (11) directly and of which at least one internal thread (8), which is smaller in comparison, adjoins it in the direction of the clip bracket (2).

6. Pipe clip according to one of claims 1 to 5, **characterized in that** the threaded connection part counterpart is designed as a threaded rod which can be screwed into the at least one internal thread (7, 8) of the threaded connection part (5).

7. Pipe clip according to one of claims 1 to 5, **characterized in that** the threaded connection part counterpart is designed as a connecting nut or connecting sleeve (12) that can be screwed onto the at least one external thread (6) of the threaded connection part (5).

8. Pipe clip according to claim 7, **characterized in that** the connecting nut or connecting sleeve (12) carries at least two differently sized internal thread sections (13, 14), of which a first internal thread section (13) is designed to be complementary to the at least one external thread (6) of the threaded connection part (5) and of which at least one further internal thread section (14) has a larger or smaller internal thread in comparison.

9. Pipe clip according to one of claims 1 to 8, **characterized in that** the clip bracket (2) has a convex bulge (15) in the form of a spherical section, directed in the direction of the threaded connection part (5), in the attachment region of the threaded connection part (5).

10. Pipe clip according to one of claims 1 to 9, **characterized in that** the threaded connection part (5) is welded to the clip bracket (2).

11. Pipe clip according to one of claims 1 to 10, **characterized in that** the threaded connection part (5) preferably passes through a hole (16) of the clip bracket (2) and engages behind the hole (16) with a widened foot on the inside.

12. Pipe clip according to one of claims 1 to 11, **characterized in that** the threaded connection part (5) and the clip bracket (2) are connected by means of resistance welding.

## Revendications

1. Collier de serrage (1) avec au moins un étrier de collier (2) sur la circonférence extérieure duquel une partie de raccordement filetée (5) qui (5) présente, pour la liaison avec une pièce opposée à la partie de raccordement filetée, au moins un filetage extérieur (6) et au moins un filetage intérieur (7, 8), dans lequel la partie de raccordement filetée (5) est fabriquée à partir d'une longueur de barre (9) ou présente une longueur de barre (9) dont la section de barre forme un polygone régulier, les arêtes sur la circonférence extérieure de la longueur de barre (9) portant l'au moins un filetage extérieur (6), et dans laquelle les zones partielles (10) parallèles disposées entre les arêtes portant le filetage de côtés longitudinaux de barre opposés de la longueur de barre (9) sont conçues comme des surfaces d'application d'outil.

2. Collier de serrage selon la revendication 1, **caractérisé en ce que** la section de barre de la longueur de barre (9) est conformée comme un quadrilatère ou comme un hexagone.

3. Collier de serrage selon la revendication 1 ou 2, **caractérisé en ce que** la partie de raccordement filetée (5) présente une longueur (19) ayant une circonférence extérieure cylindrique dans sa partie d'extrémité opposée à l'étrier de collier (2).

4. Collier de serrage selon l'une des revendications 1 à 3, **caractérisé en ce que** la longueur de barre (9) est en forme de douille et présente sur sa face frontale opposée à l'étrier de collier (2) une ouverture de vissage (11) débouchant à l'intérieur de la douille, et **en ce que** l'au moins un filetage intérieu (7, 8) est prévu sur la circonférence intérieure de l'intérieur de la douille.

5. Collier de serrage selon l'une des revendications 1 à 4, **caractérisé en ce que** la longueur de barre (9) dans son intérieur de douille comporte au moins deux filetages intérieurs (7, 8) de taille différente, dont un filetage intérieur (7) moyen se raccorde directement à l'ouverture de vissage (11) et qui est suivi d'au moins un filetage intérieur (8) plus petit en direction de l'étrier de collier (2).

6. Collier de serrage selon l'une des revendications 1 à 5, **caractérisé en ce que** la pièce opposée à la partie de raccordement filetée est conformée comme une barre filetée qui peut être vissée dans l'au moins un filetage intérieur (7, 8) de la partie de raccordement filetée (5).

7. Collier de serrage selon l'une des revendications 1 à 5, **caractérisé en ce que** la pièce opposée à la partie de raccordement filetée est conformée comme un écrou de raccordement ou une douille de raccordement (12) qui peut être vissée sur l'au moins un filetage extérieur (6) de la partie de raccordement filetée (5).

8. Collier de serrage selon la revendication 7, **caractérisé en ce que** l'écrou de raccordement ou la douille de raccordement (12) porte au moins deux longueurs de filetage intérieur (13, 14) de tailles différentes, dont une première longueur de filetage intérieur (13) a une forme complémentaire de l'au moins un filetage extérieur (6) de la partie de raccordement filetée (5) et dont au moins une autre longueur de filetage intérieur (14) présente un filetage intérieur plus grand ou plus petit qu'elle.

9. Collier de serrage selon l'une des revendications 1 à 8, **caractérisé en ce que** l'étrier de collier (2) comporte dans la zone d'appui de la partie de raccordement filetée (5) un renflement (15) convexe en forme de segment de sphère, orienté en direction de la partie de raccordement filetée (5).

10. Collier de serrage selon l'une des revendications 1 à 9, **caractérisé en ce que** la partie de raccordement filetée (5) est soudée avec l'étrier de collier (2).

11. Collier de serrage selon l'une des revendications 1 à 10, **caractérisé en ce que** la partie de raccordement filetée (5) traverse de préférence un trou (16) de l'étrier de collier (2) et passe derrière le trou (16) à l'intérieur avec un pied élargi.

12. Collier de serrage selon l'une des revendications 1 à 11, **caractérisé en ce que** la partie de raccordement filetée (5) et l'étrier de collier (2) sont assemblés par soudage par résistance.
